# EUROPÄISCHE PATENTSCHRIFT

(11) **EP 3 690 227 B1**
(45) Veröffentlichungstag und Bekanntmachung des Hinweises auf die Patenterteilung: **26.07.2023**
(21) Anmeldenummer: 20155218.9
(22) Anmeldetag: 03.02.2020
(51) Int. Cl.: F03B 11/00, F03B 11/02, F03B 13/10

(54) **WASSERTURBINE UND/ODER WASSERPUMPE**
WATER TURBINE AND/OR WATER PUMP
TURBINE HYDRAULIQUE ET/OU POMPE HYDRAULIQUE

(30) Priorität: 01.02.2019 DE 102019102620
(43) Veröffentlichungstag der Anmeldung: 05.08.2020
(73) Patentinhaber: DIVE Turbinen GmbH & Co. KG, 63916 Amorbach (DE)
(72) Erfinder: FELLA, Günter, 63916 Amorbach (DE)
(74) Vertreter: Waller, Stefan

(56) Entgegenhaltungen:
- WO-A1-2013/190007
- CH-A- 474 672
- DE-A1-102006 043 946
- US-A- 3 236 499

## Beschreibung

Die Erfindung betrifft eine Wasserturbine und/oder Wasserpumpe nach dem Oberbegriff des Patentanspruchs 1. Insbesondere betrifft die Erfindung ein Dichtungssystem für eine Welle einer solchen Wasserturbine und/oder Wasserpumpe.

Im Stand Technik sind vollständig unter Wasser angeordnete Turbinen bekannt. Solche Unterwasserturbinen kommen vor allem dann zum Einsatz, wenn aus Gründen des Landschaftsschutzes oder der optischen Anpassung an die Umgebung auffällige und größere Kraftwerksbauten vermieden werden sollen.

Bekannt sind dabei zwei Arten von Unterwasserturbinen, zum einen liegend angeordnete, bei denen eine sich drehende Turbinenwelle im Wesentlichen horizontal angeordnet ist, und senkrecht angeordnete Unterwasserturbinen, mit einer senkrechten Orientierung der Turbinen- bzw. Generatorwelle. Daneben sind umfangreich auch Wasserturbinen mit senkrecht stehenden Turbinenwellen bekannt, die nicht vollständig von Wasser umspült sind, jedoch auch eine Dichtung der Turbinenwelle aufweisen müssen.

Ebenso ist eine Abdichtung der Welle bei Kreiselpumpen als Wasserpumpen erforderlich. Insbesondere ist es möglich, die zuvor beschriebenen Unterwasserturbinen mit entsprechenden Anpassungen unter Umkehr der Strömungsrichtung auch als Pumpen zu betreiben.

Bei allen diesen Wasserturbinen und Wasserpumpen besteht das Problem einer drehenden Abdichtung des Gehäuseinneren an der Wellendurchführung, um einen Kontakt der Leistungselektronik sowie des Generators mit dem Wasser zu vermeiden. Bekannte Lösungen mit Wellendichtringen weisen vor dem Hintergrund des gewünschten durchgehenden und langen wartungsfreien Betriebes bei Wasserturbinen den Nachteil auf, dass der Dichtring naturgemäß auf einer Seite stets belastet durch den Druck des Wassers laufen muss, Verschleiß durch die schleifende Bewegung auf der Welle entsteht und Probleme mit der Schmierung der gleitenden Dichtlippe entstehen können. Auch müssen Vorkehrungen getroffen werden, trotz des Wellendichtringes eindringendes Wasser, auch wenn es sich um geringe Mengen handelt, wieder zu entfernen, da bei Turbinen sehr lange Laufzeiten ohne Wartung und im Dauerbetrieb erwünscht sind und sich auch durch nur geringe Leckagen dennoch erhebliche Mengen Leckagewasser ansammeln können.

Bei vertikal angeordneten Unterwasserturbinen ist es bekannt, keine wasserdichte Wellendichtung vorzusehen, sondern das Gehäuse der Turbinen gasdicht auszuführen, so dass das eingeschlossene Gas durch den Wasserdruck komprimiert wird und sich im unteren Bereich des Gehäuses ein Wasserspiegel ausbildet, jedoch der Bereich oberhalb des Wasserspiegels in dem Gehäuse trocken bleibt, in dem sich der Generator sowie die Elektronik befinden.

Dieselben Probleme treten jedoch auch bei Wasserpumpen sowie Wasserturbinen auf, die nicht vollständig von Wasser überspült sind. Auch bei diesen muss eine drehende Dichtung der Generatorwelle bzw. Turbinenwelle vorgesehen werden, die von Wasser umspült ist. Es ist denkbar auch in solchen Fällen die zuvor beschriebene Technik mit einem Gaspolster einzusetzen.

Aus der DE 10 2006 043 946 A1 ist eine Unterwasserturbine mit einem abgedichteten Gehäuse bekannt, das ein komprimiertes Gaspolster einschließt und eine gegenüber dem Umgebungswasser nach unten offene Durchführung für die Turbinenwelle aufweist.

Aus der WO 2013/190007A1 ist eine unter Wasserturbine nach dem Oberbegriff des Patentanspruchs 1 bekannt. Die CH 474 672 A offenbart eine Vorrichtung zur Zufuhr von Gasen in Kranzräume von Turbomaschinen.

Es ist auch bekannt, in dem Gehäuse gegenüber der Welle eine oder mehrere den Wasserdurchtritt verzögernde Dichtungen, insbesondere Labyrinthdichtungen, vorzusehen.

Eine solche Dichtung, insbesondere eine Labyrinthdichtung, kann so ausgeführt sein, dass sie die Welle nicht berührt und es somit zu keinem Verschleiß kommt. Durch die Dichtung wird beim Wiederanstieg des Wasserspiegels, beispielsweise beim Ansteigen des statischen Drucks nach einem Abschalten oder Abbremsen der Turbine, der Durchtritt des Wassers verzögert, da mit der Dichtung beispielsweise eine Querabtrennung in dem Gehäuse vorgesehen ist, insbesondere eine Querplatte, und die gesamte, aufsteigende Wassermengen durch diese Dichtung mit einem wirksamen Durchlassquerschnitt für Wasser hindurch strömen muss. Beispielsweise bei einer Labyrinthdichtung, die mehrere, die Welle nicht berührende Kanten, nacheinander aufweist, bilden sich Wirbel und muss das gesamte Wasser durch den engen Spaltquerschnitt zwischen den Kanten und der Welle hindurchtreten. Dadurch kommt es zu einer erheblichen zeitlichen Verzögerung des Anstiegs des Wasserspiegels.

Welchen Wasserdruck eine solche Abdichtung der Turbinenwelle widerstehen kann bzw. bis zu welchem maximalen Wasserdruck abhängig von den Betriebszuständen die Elektronik und der Generator im Raum oberhalb der Wellendichtung in jedem Fall trocken bleiben, hängt von einem Kompressionsraum ab, dessen Volumen gegenüber einem freien Volumen im Bereich des Generators groß sein sollte.

Wenn beispielsweise das gesamte Volumen des Kompressionsraums in etwa gleich groß ist wie die noch freien Volumen im Bereich des Generator oberhalb, so führt die Verdrängung der Luft bzw. des Gases aus dem Kompressionsraum zu einer Verdoppelung des Gasdrucks. Wenn daher der Bereich des Generators und der Elektronik im oberen Teil des Gehäuses so gestaltet wird, dass möglichst wenig freie Volumen verbleiben bzw. eventuell diese freien Volumen durch Füllkörper aufgefüllt werden, und gleichzeitig der Kompressionsraum so gestaltet wird, dass er ein möglichst großes Volumen aufweist, so kann bei einer Annäherung des Wasserspiegels an den Bereich des Generators eine schnelle Druckerhöhung und somit eine niedrig liegende Gleichgewichtslage des Wasserspiegels erreicht werden

Bei größeren Fallhöhen entsteht bei Turbinen, die nicht überspült werden, jedoch nach demselben Verfahren abgedichtet werden, aber auch denkbar bei vollständig unter Wasser angeordneten Turbinen sowie bei Wasserpumpen, das Problem, dass schnell hohe statische Wasserdrücke entstehen, wenn die Turbine abgebremst wird und Ventile geschlossen werden. Weiterhin müssen zusätzliche Sicherheitszuschläge berücksichtigt werden und dynamische Effekte, die für einen gewissen Zeitraum zu weiteren Druckerhöhungen führen können. Daher entsteht bei mittleren Fallhöhen, beispielsweise oberhalb von 20 m, schnell das Problem, dass Füllkörper und der hier beschriebene Kompressionsraum nicht ausreichen.

Es ist daher Aufgabe der Erfindung, ein Dichtungssystem für eine Welle einer Wasserturbine und/oder Wasserpumpe vorzusehen, das die zuvor genannten Nachteile vermeidet und als verschleißfreie Dichtung auch bei größeren Fallhöhen eine sichere Abdichtung ermöglicht.

Diese Aufgabe wird durch ein eine Wasserturbine und/oder Wasserpumpe mit den Merkmalen des unabhängigen Patentanspruchs 1 gelöst. Vorteilhafte Weiterbildungen der Erfindung sind in den Unteransprüchen angegeben.

Die Aufgabe wird gelöst durch eine Wasserturbine und/oder Wasserpumpe mit einem gasdichten Gehäuse, in dem eine elektrische Maschine, insbesondere ein Generator und/oder Elektromotor angeordnet ist, mit einer Welle, die die elektrische Maschine mit einem Turbinenlaufrad verbindet, wobei die Welle unter einem Winkel gegenüber der Horizontalen angeordnet ist und die Welle nach unten aus dem Gehäuse durch eine Wellenöffnung heraus geführt ist, so dass ein Eindringen des Wassers in das Gehäuse durch ein in dem Gehäuse komprimiertes Gasvolumen verhindert wird, bei der ein Zusatzkompressionsvolumen vorgesehen ist, das über eine Verbindungsleitung am Boden des Zusatzkompressionsvolumens mit dem Inneren des Gehäuses über eine Zulauföffnung verbunden ist sowie über eine oben in dem Zusatzkompressionsvolumen angeordnete Gasverbindungsleitung mit einem Gaseinlass im oberen Bereich des Gehäuses.

Es ist ein nicht im Gehäuse der Welle bzw. in der Turbineneinheit angeordnetes, Zusatzkompressionsraum vorgesehen. Dieser zusätzliche Kompressionsraum ist über die Verbindungsleitung am Boden des Zusatzkompressionsvolumens mit dem Inneren des Gehäuses über eine Zulauföffnung verbunden sowie über eine oben in dem Zusatzkompressionsvolumen angeordnete Gasverbindungsleitung mit einem Gaseinlass im oberen Bereich des Gehäuses.

Dadurch wird über die untere Verbindungsleitung bzw. Zulaufleitung Wasser in das Zusatzkompressionsvolumen gedrückt und das komprimierte Gas bzw. die Luft über die obere Verbindungsleitung, bzw. Gasverbindungsleitung, in das Gehäuse der Wasserturbine und/oder Wasserpumpe, um dort das freie Volumen im Bereich der elektrischen Maschine, z.B. eines Generators, trocken zu halten durch den entstehenden Überdruck. Wenn beispielsweise bei einem Stopp der Wasserturbine und/oder Wasserpumpe der statische Druck rasch ansteigt, steht ein viel größeres wirksames Kompressionsvolumen im Verhältnis zu dem verbleibenden Volumen zur Verfügung und es baut sich ein höherer Gegendruck auf. Dadurch ist es auch möglich, Maschinen mit größerer wirksamerer Wassersäule, beispielsweise Wasserturbinen mit größeren Fallhöhen über 20 m ohne schleifende Dichtung auszuführen.

Das Zusatzkompressionsvolumen kann aber auch etwas entfernt und vollständig abgetrennt je nach örtlichen Gegebenheiten vorgesehen werden.

Vorteilhaft ist die Welle senkrecht angeordnet.

Die beschriebene Abdichtung der Welle kann auch bei Wellen zum Einsatz kommen, die mit einer Neigung gegenüber der Senkrechten ausgeführt sind. Im optimalen Fall steht aber die Welle senkrecht.

Die Zulauföffnung kann mit möglichst geringem Abstand oberhalb der Wellenöffnung angeordnet sein.

Bei eindringendem Wasser strömt dieses sehr bald auch in das Zusatzkompressionsvolumen und dieses wird schnell wirksam.

In einer vorteilhaften Ausgestaltung weist die Wellenöffnung mindestens eine den Wasserdurchtritt gegenüber der Welle verzögernde erste Dichtung, insbesondere eine Labyrinthdichtung, auf.

Zu einem starken Anstieg des Wassers in dem Gehäuse kommt es vor allem aufgrund dynamischer Effekte, etwa bei einem Abbremsen der Wasserturbine und/oder der Wasserpumpe bis zum Stillstand. Daher ist es vorteilhaft, wenn die Wellenöffnung zwar keine schleifende Dichtung aufweist, aber den Durchtritt von Wasser stark verzögert.

In einer weiter verbesserten Ausgestaltung ist in dem Gehäuse zwischen Zulauföffnung und Gaseinlass eine Querabtrennung mit einer den Wasserdurchtritt gegenüber der Welle verzögernden zweiten Dichtung, insbesondere einer Labyrinthdichtung, angeordnet.

Es ist vorteilhaft, wenn die Verbindungsleitung und die Gasverbindungsleitung so in das Gehäuse eingeleitet werden, dass zwischen deren Höheniveaus sich eine Labyrinthdichtung befindet. Dadurch wird bei einem schnellen Anstieg des Wassers ein Großteil des Wassers in das Zusatzkompressionsvolumen gedrückt und rasch komprimierte Luft bzw. Gas über die obere Gasverbindungsleitung zurückgedrückt. Eventuell kann, wenn dies aufgrund der Einbausituation erforderlich ist, das Zusatzkompressionsvolumen im Niveau auch etwas höher angeordnet werden. Da der Anstieg des Wassers durch die Labyrinthdichtung stark abgebremst wird, wird dieses dennoch in das Zusatzkompressionsvolumen auf dem höheren Niveau gedrückt und dessen Gasinhalt für den Gegendruck wirksam.

Vorteilhaft ist in dem Gehäuse oberhalb des Gaseinlasses eine Querabtrennung mit einer den Wasserdurchtritt gegenüber der Welle verzögernden dritten Dichtung, insbesondere einer Labyrinthdichtung, angeordnet.

Am Boden des Zusatzkompressionsvolumens kann ein Ablauf mit einer Drossel angeordnet sein.

Schließlich ist es noch vorteilhaft, am Boden des Zusatzkompressionsvolumens einen Ablauf mit einer Drossel vorzusehen. Dadurch kann insbesondere bei dem Zurückströmen des Wassers ein Großteil des Wassers über diesen Ablauf abgeführt werden und muss nicht über die Wellenöffnung in ein Saugrohr abgeleitet werden.

Vorteilhaft ist das Zusatzkompressionsvolumen oberhalb einer und/oder um eine spiralförmige Zulaufleitung zu dem Turbinenrad angeordnet.

Bei vielen Ausführungsformen von Wasserturbinen steht hier noch ein Bauraum zur Verfügung. Insbesondere verjüngt sich oftmals eine Spirale in ihrem Rohrdurchmesser. Dadurch ergibt sich die Möglichkeit, hier ein Volumen als Zusatzkompressionsvolumen anzuordnen.

Weitere Vorteile und Einzelheiten der Erfindung werden anhand des in der schematischen Figur dargestellten Ausführungsbeispiels näher erläutert.

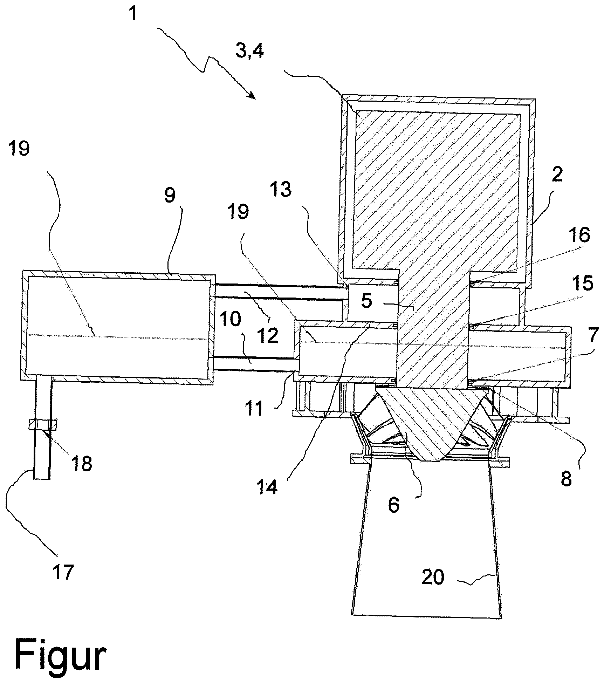

Hierbei zeigt die Figur eine Wasserturbine 1 mit einem gasdichten Gehäuse 2, in dem eine elektrische Maschine 3, insbesondere ein Generator 4 angeordnet ist. Die elektrische Maschine 3 ist über eine Welle 5 mit einem Turbinenlaufrad 6 verbunden, das über einem Saugrohr 20 angeordnet ist. Die Welle 5 ist nach unten aus dem Gehäuse 2 durch eine Wellenöffnung 7 hindurch geführt, wobei in der Wellenöffnung 7 eine erste Labyrinthdichtung 8 angeordnet ist.

Ein Zusatzkompressionsvolumen 9 ist getrennt von dem Gehäuse 2 vorgesehen. Über eine Verbindungsleitung 10 am Boden des Zusatzkompressionsvolumens 9 und eine Zulauföffnung 11 ist das Zusatzkompressionsvolumen 9 knapp oberhalb der Wellenöffnung 7 mit dem Inneren des Gehäuses 2 verbunden. Eine oben in dem Zusatzkompressionsvolumen 9 angeordnete Gasverbindungsleitung 12 ist über einen Gaseinlass 13 im oberen Bereich mit dem Inneren des Gehäuses 2 verbunden.

Zwischen der Zulauföffnung 11 und dem Gaseinlass 13 ist eine Querabtrennung 14 mit einer zweiten Labyrinthdichtung 15 angeordnet. Zusätzlich ist noch einmal oberhalb des Gaseinlasses 13 eine dritte Labyrinthdichtung 16 angeordnet, über der sich die elektrische Maschine 3 befindet, deren Kontakt mit Wasser vermieden werden muss.

Am Boden des Zusatzkompressionsvolumens 9 ist ein Ablauf 17 mit einer Drossel 18 angeordnet.

Die schematische Darstellung der Figur zeigt den Zustand, wenn ein Wasserspiegel 19 sowohl in dem Gehäuse 2 sich gebildet hat, wie auch in dem Zusatzkompressionsvolumen 9, sodass über die Gasverbindungsleitung 12 Luft in das Gehäuse 2 gedrückt wird.

## Patentansprüche

1. Wasserturbine und/oder Wasserpumpe mit einem gasdichten Gehäuse (2), in dem eine elektrische Maschine (3), insbesondere ein Generator (4) und/oder Elektromotor angeordnet ist, mit einer Welle (5), die die elektrische Maschine (3) mit einem Turbinenlaufrad verbindet, wobei die Welle unter einem Winkel gegenüber der Horizontalen angeordnet ist und die Welle (5) nach unten aus dem Gehäuse (2) durch eine Wellenöffnung (7) herausgeführt ist, so dass ein Eindringen des Wassers in das Gehäuse (2) durch ein in dem Gehäuse (2) komprimiertes Gasvolumen verhindert wird,
**dadurch gekennzeichnet,**
**dass** ein Zusatzkompressionsvolumen (9) vorgesehen ist, das über eine Verbindungsleitung(10) am Boden des Zusatzkompressionsvolumens (9) mit dem Inneren des Gehäuses (2) über eine Zulauföffnung (11) verbunden ist sowie über eine oben in dem Zusatzkompressionsvolumen (9) angeordnete Gasverbindungsleitung (12) mit einem Gaseinlass (13) im oberen Bereich des Gehäuses (2).

2. Wasserturbine und/oder Wasserpumpe nach Anspruch 1,
**dadurch gekennzeichnet,**
**dass** die Welle senkrecht angeordnet ist.

3. Wasserturbine und/oder Wasserpumpe nach Anspruch 1 oder 2,
**dadurch gekennzeichnet,**
**dass** die Zulauföffnung (11) mit möglichst geringem Abstand oberhalb der Wellenöffnung (7) angeordnet ist.

4. Wasserturbine und/oder Wasserpumpe nach einem der vorhergehenden Ansprüche,
**dadurch gekennzeichnet,**
**dass** die Wellenöffnung (7) mindestens eine den Wasserdurchtritt gegenüber der Welle verzögernde erste Dichtung, insbesondere eine Labyrinthdichtung (8), aufweist.

5. Wasserturbine und/oder Wasserpumpe nach einem der vorhergehenden Ansprüche,
**dadurch gekennzeichnet,**
**dass** in dem Gehäuse (2) zwischen Zulauföffnung (11) und Gaseinlass (13) eine Querabtrennung (14) mit einer den Wasserdurchtritt gegenüber der Welle (5) verzögernden zweite Dichtung, insbesondere einer Labyrinthdichtung (15), angeordnet ist.

6. Wasserturbine und/oder Wasserpumpe nach einem der vorhergehenden Ansprüche,
**dadurch gekennzeichnet,**
**dass** in dem Gehäuse (5) oberhalb des Gaseinlasses (13) eine Querabtrennung mit einer den Wasserdurchtritt gegenüber der Welle verzögernden dritten Dichtung, insbesondere einer Labyrinthdichtung (16), angeordnet ist.

7. Wasserturbine und/oder Wasserpumpe nach einem der vorhergehenden Ansprüche,
**dadurch gekennzeichnet,**
**dass** am Boden des Zusatzkompressionsvolumens (9) ein Ablauf (17) mit einer Drossel (18) angeordnet ist.

8. Wasserturbine und/oder Wasserpumpe nach Anspruch 7 und nach Anspruch 4, **dadurch gekennzeichnet,**
**dass** das Zusatzkompressionsvolumen (9) oberhalb einer und/oder um eine spiralförmige Zulaufleitung zu dem Turbinenlaufrad (6) angeordnet ist.

## Claims

1. Water turbine and/or water pump having a gas tight housing (2), in which an electric machine (3), in particular a generator (4) and/or an electric motor is arranged, having a shaft (5) which connects the electric machine (3) to a turbine impeller, wherein the shaft is arranged at an angle with respect to the horizontal and the shaft (5) is led out downwards from the housing (2) through a shaft opening (7), so that penetration of the water into the housing (2) is prevented by a gas volume compressed in the housing (2),
**characterized in that**
an additional compression volume (9) is provided, which is connected via a connecting line (10) at the bottom of the additional compression volume (9) to the interior of the housing (2) via an inlet opening (11), and via a gas connecting line (12) arranged at the top in the additional compression volume (9) to a gas inlet (13) in the upper region of the housing (2).

2. Water turbine and/or water pump according to Claim 1,
**characterized in that**
the shaft is arranged vertically.

3. Water turbine and/or water pump according to Claim 1 or 2,
**characterized in that**
the inlet opening (11) is arranged at the shortest possible distance above the shaft opening (7).

4. Water turbine and/or water pump according to one of the preceding claims,
**characterized in that**
the shaft opening (7) has at least one first seal, in particular a labyrinth seal (8), retarding the passage of water with respect to the shaft.

5. Water turbine and/or water pump according to one of the preceding claims,
**characterized in that**
a transverse partition (14) with a second seal, in particular a labyrinth seal (15), retarding the passage of water with respect to the shaft (5), is arranged in the housing (2) between the inlet opening (11) and the gas inlet (13).

6. Water turbine and/or water pump according to one of the preceding claims,
**characterized in that**
a transverse partition with a third seal, in particular a labyrinth seal (16), retarding the passage of water with respect to the shaft, is arranged in the housing (5) above the gas inlet (13).

7. Water turbine and/or water pump according to one of the preceding claims,
**characterized in that**
a drain (17) with a throttle (18) is arranged at the bottom of the additional compression volume (9).

8. Water turbine and/or water pump according to Claim 7 and according to Claim 4,
**characterized in that**
the additional compression volume (9) is arranged above and/or around a spiral inlet line to the turbine impeller (6) .

## Revendications

1. Turbine hydraulique et/ou pompe hydraulique avec un boîtier (2) étanche aux gaz, dans lequel est agencée une machine électrique (3), notamment un générateur (4) et/ou un moteur électrique, avec un arbre (5) qui relie la machine électrique (3) à une roue de turbine, l'arbre étant agencé selon un angle par rapport à l'horizontale et l'arbre (5) sortant vers le bas du boîtier (2) par une ouverture d'arbre (7), de telle sorte qu'une pénétration de l'eau dans le boîtier (2) est empêchée par un volume de gaz comprimé dans le boîtier (2),
**caractérisée en ce que**
un volume de compression supplémentaire (9) est prévu, qui est relié par l'intermédiaire d'une conduite de liaison (10) au fond du volume de compression supplémentaire (9) à l'intérieur du boîtier (2) par l'intermédiaire d'une ouverture d'alimentation (11) ainsi que par l'intermédiaire d'une conduite de liaison de gaz (12) agencée en haut dans le volume de compression supplémentaire (9) avec une entrée de gaz (13) dans la partie supérieure du boîtier (2).

2. Turbine hydraulique et/ou pompe hydraulique selon la revendication 1,
**caractérisée en ce que**
l'arbre est agencé verticalement.

3. Turbine hydraulique et/ou pompe hydraulique selon la revendication 1 ou 2,
**caractérisée en ce que**
l'ouverture d'alimentation (11) est agencée à une distance aussi faible que possible au-dessus de l'ouverture d'arbre (7).

4. Turbine hydraulique et/ou pompe hydraulique selon l'une quelconque des revendications précédentes, **caractérisée en ce que**
l'ouverture d'arbre (7) présente au moins un premier joint d'étanchéité, notamment un joint labyrinthe (8), qui retarde le passage de l'eau par rapport à l'arbre.

5. Turbine hydraulique et/ou pompe hydraulique selon l'une quelconque des revendications précédentes, **caractérisée en ce que**
dans le boîtier (2), entre l'ouverture d'alimentation (11) et l'entrée de gaz (13), est agencée une séparation transversale (14) avec un deuxième joint d'étanchéité, notamment un joint labyrinthe (15), qui retarde le passage de l'eau par rapport à l'arbre (5).

6. Turbine hydraulique et/ou pompe hydraulique selon l'une quelconque des revendications précédentes, **caractérisée en ce que**
dans le boîtier (5), au-dessus de l'entrée de gaz (13), est agencée une séparation transversale avec un troisième joint d'étanchéité, notamment un joint labyrinthe (16), qui retarde le passage de l'eau par rapport à l'arbre.

7. Turbine hydraulique et/ou pompe hydraulique selon l'une quelconque des revendications précédentes, **caractérisée en ce que**
au fond du volume de compression supplémentaire (9) est agencée une sortie (17) avec un étranglement (18).

8. Turbine hydraulique et/ou pompe hydraulique selon la revendication 7 et selon la revendication 4, **caractérisée en ce que**
le volume de compression supplémentaire (9) est agencé au-dessus et/ou autour d'une conduite d'alimentation en spirale vers la roue de turbine (6).
